## Europäisches Patentamt
## European Patent Office
## Office européen des brevets

(11) Veröffentlichungsnummer: **0 083 678**
**B1**

(12) # EUROPÄISCHE PATENTSCHRIFT

(45) Veröffentlichungstag der Patentschrift:
02.05.85

(51) Int. Cl.⁴: **B 23 D 15/00**

(21) Anmeldenummer: **82100194.8**

(22) Anmeldetag: **13.01.82**

(54) Eckenschere.

(43) Veröffentlichungstag der Anmeldung:
20.07.83 Patentblatt 83/29

(45) Bekanntmachung des Hinweises auf die Patenterteilung:
02.05.85 Patentblatt 85/18

(84) Benannte Vertragsstaaten:
AT BE CH DE FR GB IT LI LU NL SE

(56) Entgegenhaltungen:
DE - A - 2 931 410
DE - U - 7 605 483
US - A - 2 837 160
US - A - 3 272 053

(73) Patentinhaber: F.I.M. s.r.l., Via Ristori 10/3,
I-40127 Bologna (IT)

(72) Erfinder: Camisa, Alessandro, Via Marchi 64, Felegara
(Parma) (IT)

(74) Vertreter: Solf, Alexander, Dr. et al, Dr. Solf & Zapf
Asamstrasse 8, D-8000 München 90 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung betrifft eine Eckenschere zum Ausschneiden von stumpf- bis spitzwinkligen Ecken gemäss Oberbegriff des Anspruchs 1.

Eine derartige Eckenschere ist aus dem DE-U Nr. 7605483 bekannt. Diese Vorrichtung weist ein Paar von C-förmigen, senkrecht angeordneten Ständern auf, deren waagerechten Abschnitte in einer senkrechten Achse gelenkig miteinander verbunden sind. Im Bereich der Ausnehmung zwischen dem oberen und unteren Abschnitt sind Messer befestigt, so dass sie beim Verschwenken der Ständer um die senkrechte Achse mitverschwenkt werden. Dabei verändert sich der Winkel zwischen dem oberen ebenso wie zwischen dem unteren Messerpaar. Nachteilig bei dieser bekannten Eckenschere ist, dass die beim Schneiden auftretenden Kräfte von den verstellbaren Ständern aufgenommen werden müssen, deren Bauform entsprechend massiv und aufwendig ausgeführt sein muss.

Aufgabe der Erfindung ist es, die eingangs beschrieben Eckenschere derart zu verbessern, dass eine kompakte Bauweise bei einfacher Verstellung der Ober- und Untermesser möglich ist.

Diese Aufgabe wird durch die Merkmale des Anspruchs 1 gelöst. Vorteilhafte Weiterbildungen der erfindungsgemässen Schere sind in den Unteransprüchen angegeben. Anhand der Zeichnung wird die Erfindung beispielhaft näher erläutert. Es zeigen:

Fig. 1 schematisch eine perspektivische Ansicht der neuen Eckenschere mit den wichtigsten Funktionsteilen,

Fig. 2 eine Explosionsdarstellung der Anordnung der Obermesser,

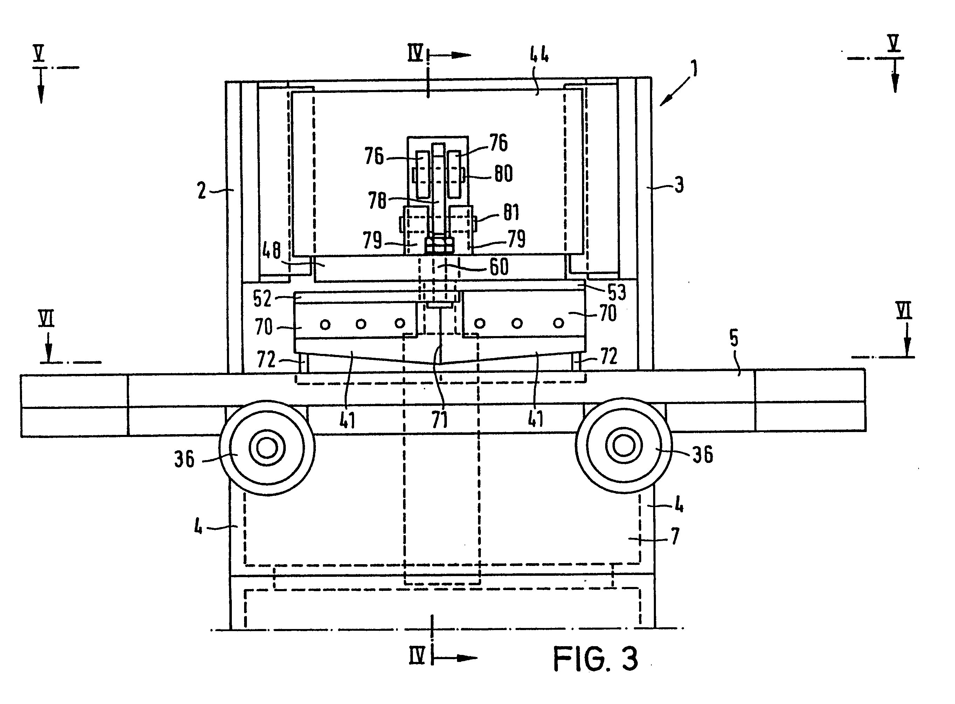

Fig. 3 eine Vorderansicht gemäss Pfeilrichtung III in Fig. 1,

Fig. 4 einen Querschnitt durch die Eckenschere entlang der Linie IV-IV gemäss Pfeilrichtung in Fig. 3,

Fig. 5 eine Draufsicht auf die Eckenschere gemäss Pfeilrichtung V in Fig. 3, und

Fig. 6 eine Draufsicht auf die Untermesseranordnung gemäss Pfeilrichtung VI in Fig. 3.

Die Eckenschere ist zweckmässigerweise in einem kastenrahmenartigen Maschinengestell 1 gelagert, das im wesentlichen die beiden Seitenwände 2 und 3 mit entsprechenden Querstreben zur Gewährleistung der erforderlichen Stabilität des Kastenrahmens aufweist. Die Seitenwände 2 und 3 können von der Seite betrachtet L-förmig ausgebildet sein, wobei auf den waagerechten L-Schenkeln 4 der Schneid- bzw. Arbeitstisch 5 in geeigneter Weise lagert (nicht dargestellt). Eine Vorderwand 7 zwischen den L-Schenkeln 4 verschliesst die Vorrichtung unter dem Arbeitstisch 5. Auf dem Arbeitstisch sind an sich bekannte Nuten 8 mit Winkelverstelleinrichtungen 9 angeordnet.

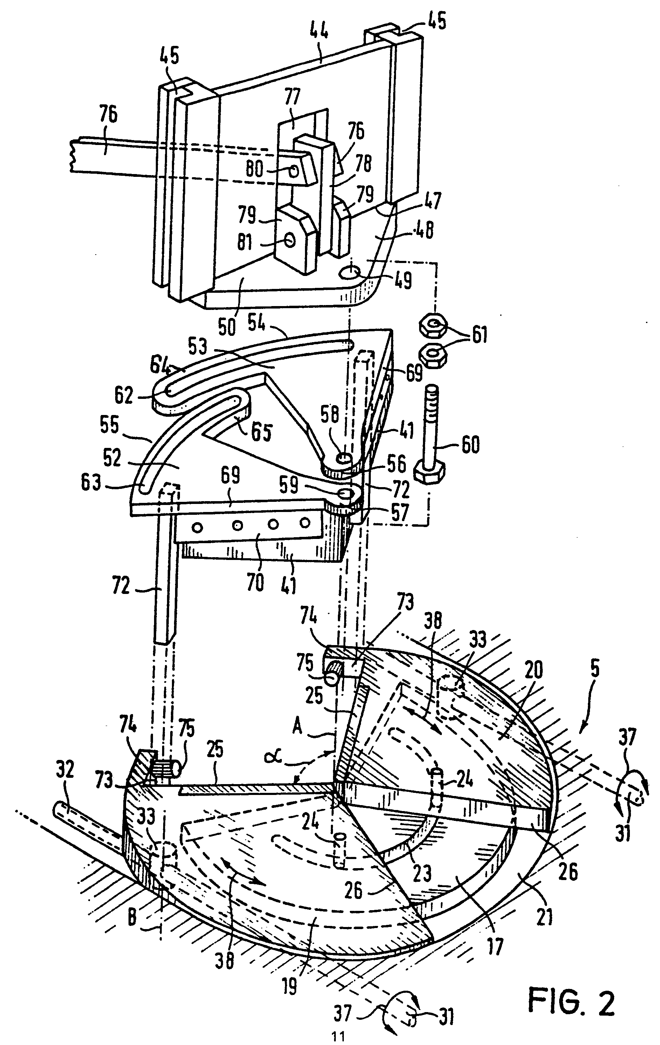

Der Arbeitstisch 5 weist eine Ausnehmung 10 mit einem Kreisbogen auf; letzterer befindet sich im Abstand von der Vorderkante 11 und mittig im Abstand von den Seitenwänden 12 des Arbeitstisches 5, wobei die Ausnehmung 10 zur Hinterkante 13 hin parallel zu den Seitenkanten 12 ausläuft, so dass der Arbeitstisch 5 in der Draufsicht betrachtet U-förmig ausgebildet ist. Der Mittelpunkt des Kreisbogens der Ausnehmung 10 liegt auf der Achse A (Fig. 2). Im Bereich der Ausnehmung 10 ist erfindungsgemäss die winkelverstellbare Untermessereinrichtung 6 angeordnet.

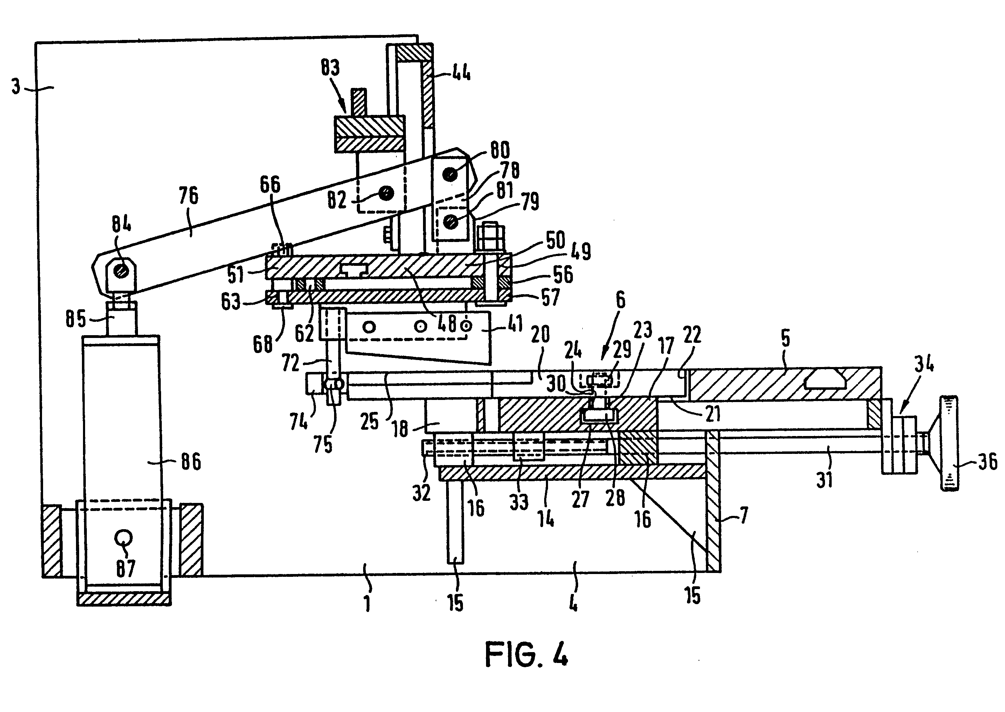

Die Untermessereinrichtung 6 wird von einer Tragplatte 14 abgestützt, die im Abstand waagerecht unter dem Arbeitstisch 5 zwischen den L-Schenkeln 4 sitzt, an letzteren sowie an der Vorderwand 7 befestigt ist und dabei zweckmässigerweise noch auf dreieckförmigen Winkeleisen 15 ruht, die, wie abgebildet, an den L-Schenkeln 4 und an der Vorderwand 7 angeordnet sind (Fig. 4). Auf der Tragplatte sitzen mindestens drei Tragklötze 16 derart verteilt, dass sie sich in den Eckpunkten eines Dreiecks befinden, wobei die Spitze des Dreiecks zur Vorderwand 7 weist. Diese Klötze 16 bilden ein statisch bestimmtes Auflager für eine V-förmig ausgeschnittene Kreisscheibe 17, deren Ausschnitt 18 rückwärtig angeordnet ist, wobei sich die Ecke des V-förmigen Ausschnitts 18 vorzugsweise nicht in der Mittenachse der Kreisscheibe 17 befindet, die Mittenachse jedoch in der Achse A liegt. Der Radius der Kreisscheibe 17 ist kleiner als der Radius des Bogens der Ausnehmung 10, so dass ein Ringspalt 21 frei bleibt.

Auf der Kreisscheibe 17 lagern um die Mittenachse A in der waagerechten Ebene schwenkbar zwei sich gegenüberliegend angeordnete scheibenförmige Messerträgersegmente 19, 20, die in der Draufsicht betrachtet als winklige Kreissektorsegmente ausgebildet sind, wobei die Winkeleckkanten sich im Bereich der Mittenachse A gegenüberliegen (Fig. 2) und der Radius der Segmente nur geringfügig kleiner ist als der Radius des Bogens der Ausnehmung 10, so dass die Segmente 19, 20 nahezu formschlüssig mit ihren Bogenkanten 22 im Bogen der Ausnehmung 10 sitzen.

Die Kreissektorsegmente 19, 20 sind erfindungsgemäss um die Achse A in der waagerechten Ebene verschwenkbar angeordnet, wobei die Oberfläche der Segmente mit der Oberfläche des Arbeitstisches 5 fluchtend in einer waagerechten Ebene liegt zweckmässig ist, für die verschwenkbare Lagerung der Segmente auf der Kreisscheibe 17 eine in der Draufsicht kreisbogenförmige Nut 23 vorzusehen und den Mittelpunkt des Kreisbogens der Nut in die Achse A zu legen. In die Nut 23 greift jeweils ein senkrecht aus dem Segment 19, 20 nach unten ragender Stift 24 formschlüssig, indem dessen Durchmesser oder Breite der Breite der Nut entspricht, so dass jeder Stift in der Nut gleiten kann. Diese Anordnung gewährleistet mit einfachen Mitteln, dass die Segmente 19, 20 auf der Kreisscheibe 17 in der waagerechten Ebene ohne seitliche Versetzung auf einem Kreisbogen verschwenkt werden können, wobei der Winkel $\alpha$ zwischen den Segmenthinterkanten 25 in den vorgegebenen Grenzen (Länge der Nut 23 und Anschlag der Segmentvorderkanten 26 gegeneinander) verändert wird. Die Arretierung der Segmente 19, 20 auf der Kreisscheibe 17 nach der Verstellung des Winkels $\alpha$ kann in geeigneter Weise erfolgen; sie wird vorzugsweise mit hydraulischen Mitteln gewährleistet, die eine hydraulische Blockierung bewirken.

Nach einer besonderen Ausführungsform der Erfindung ist die Nut 23 im Querschnitt auf dem Kopf stehend T-förmig ausgebildet, wobei die Querausnehmung 27 den Boden der Nut bildet. Der Stift 24 ist entsprechend mit einem Kopf 28 versehen, der formschlüssig in der Querausnehmung 27 sitzt. Vorzugsweise durchgreift der Stift 24 eine Bohrung 30 im Segment 19, 20 und weist ein Gewinde auf, so dass er mit einer Mutter 29, die in einer entsprechenden Ausnehmung des Segmentes 19, 20 versenkt ist, lösbar befestigt ist und die Kreisscheibe 17 mit dem jeweiligen Segment 19, 20 verspannt werden kann. Zur Veränderung des Winkels α werden die Muttern 29 gelöst, die Segmente 19, 20 verschwenkt und anschliessend die Muttern 29 wieder angezogen.

Zur Vereinfachung des Verschwenkens und zur Kontrolle des Schwenkwinkels ist für jedes Segment 19, 20 zweckmässigerweise eine etwa waagerecht verlaufende Spindel 31 vorgesehen. Jede Spindel 31 trägt am hinteren Ende ein Aussengewinde 32, das in einem entsprechenden Innengewinde eines Lagerzapfens 33 geführt wird, der an der Unterseite im Aussenrandbereich in der Nähe der Kante 25 am Segment 19, 20 um eine vertikale Achse B drehbar angeordnet ist (Fig. 2). Die Lagerzapfen 33 ragen zweckmässigerweise in den Ringspalt 21 und werden dort auf einer Kreisbahn geführt.

Jede Spindel 31 geht frei durch ein Loch der Vorderwand 7 und durchgreift ein dem Schwenklager 33 entsprechendes Schwenklager 35, das an einem an der Vorderkante des Arbeitstisches 5 sitzenden Lagerblock 34 befestigt ist. Am vorderen Ende jeder Spindel sitzt, wie an sich bekannt, ein Tellerrad 36 zum Drehen der Spindel in Pfeilrichtung 37 (Fig. 2). Beim Drehen in Pfeilrichtung 37 werden die Segmente 19, 20 in Pfeilrichtung 38 um die vertikale Achse A verschwenkt (Fig. 2), wobei die seitliche Versetzung und Vor- und Zurückbewegung der Spindeln durch die Schwenklager 33, 35 aufgenommen wird.

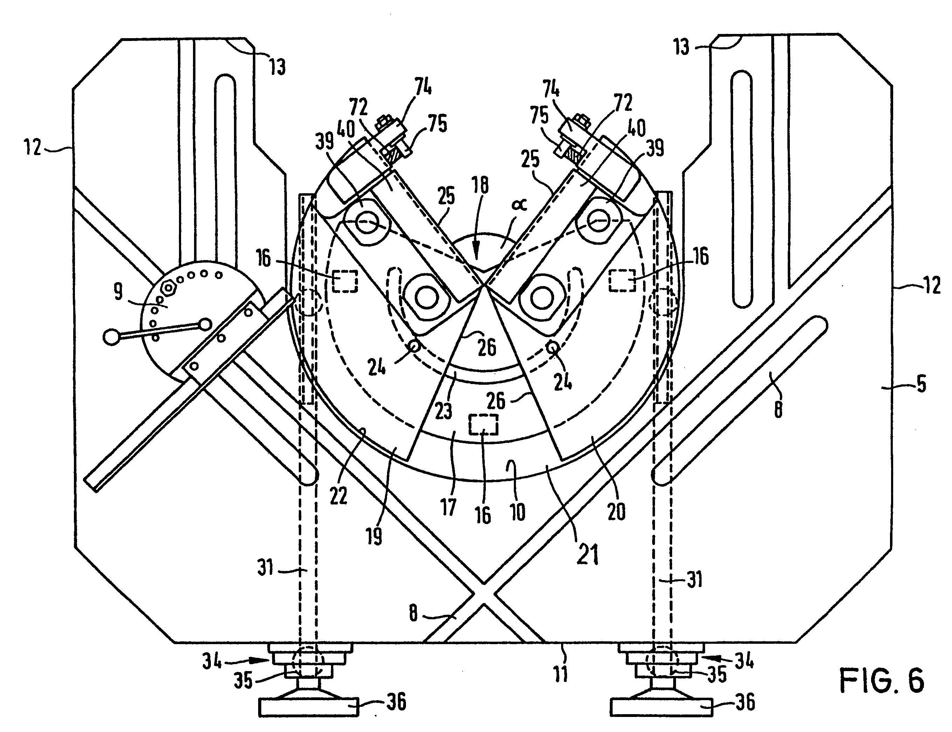

Die Segmenthinterkanten 25 bilden die Schneidkanten der Untermesser, die, wie üblich, V-förmig zueinander angeordnet sind. Es können, wie üblich, Haltemittel 39 und Ausnehmungen im Bereich der Segmentkanten 25 zum Einsatz auswechselbarer Untermesser 40 vorgesehen sein (Fig. 6).

Wesentlich ist, dass die Obermesser ebenfalls um die vertikale Achse A schwenkbar, jedoch in von den Lagerelementen der Untermesser unabhängigen, getrennten Lagerelementen gelagert sind und durch die Bewegung der Segmente 19, 20 über Mitnehmer mitverschwenkt werden, die einen seitlich starren, in vertikaler Richtung jedoch gleitenden Kontakt zwischen den Segmenten 19, 20 und den Lagerelementen der Obermesser herstellen.

Während die beiden, von oben betrachtet V-förmig zueinander angeordneten Untermesser 40 in vertikaler Richtung ortsfest lagern, wird mit den Obermessern 41, deren Schneiden ebenfalls, wie üblich, V-förmig zueinander angeordnet sind, eine vertikale Hubbewegung zum Scheren ausgeführt. Dabei gleiten die Schneiden der Obermesser scherenartig an den Schneiden der Untermesser vorbei und bewirken den Scherenschnitt. Aus diesem Grunde ist es erforderlich, dass der Kantenwinkel der Schneiden der Obermesser gleich dem Eckwinkel α der Schneiden der Untermesser ist. Zur Gewährleistung dieser Übereinstimmung ist die Obermesseranordnung wie folgt vorgesehen.

Im vorderen Endbereich der Wände 2, 3 sind innenseitig schienenartige Gleitführungselemente 42 in vertikaler Richtung angeordnet. Im dargestellten Beispiel bestehen die Elemente 42 aus je einem Steg 43. Zwischen den Stegen 43 steckt eine Gleitplatte 44 mit seitlich sitzenden, in der Draufsicht betrachtet U-förmigen Gleitausnehmungen 45, die formschlüssig den Steg 43 umgreifen, so dass sich eine Gleitführung ergibt und die Gleitplatte 44 in Pfeilrichtung 46 auf und ab geschoben werden kann.

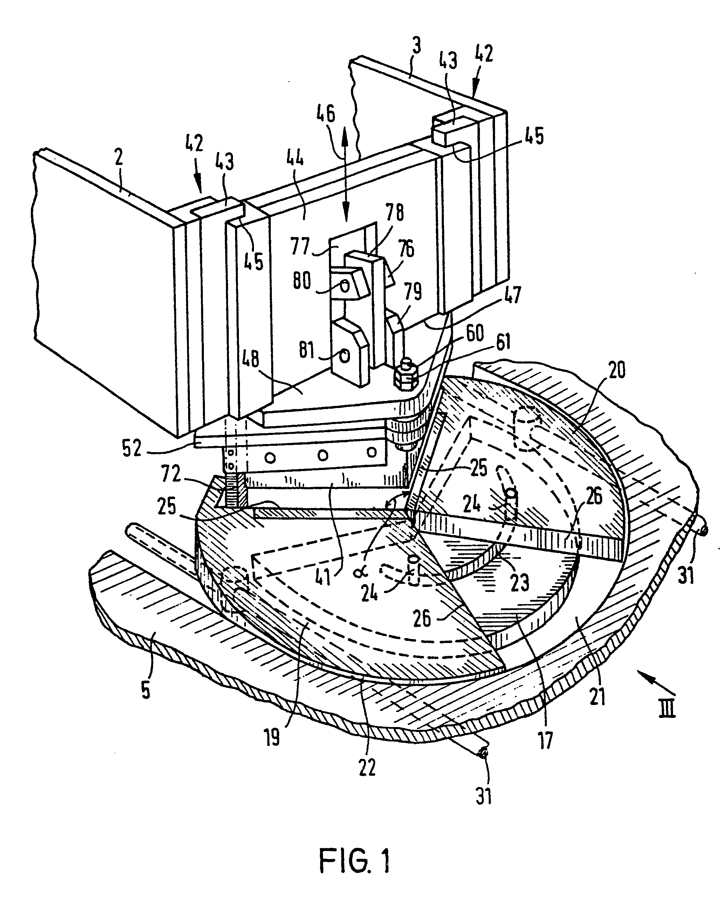

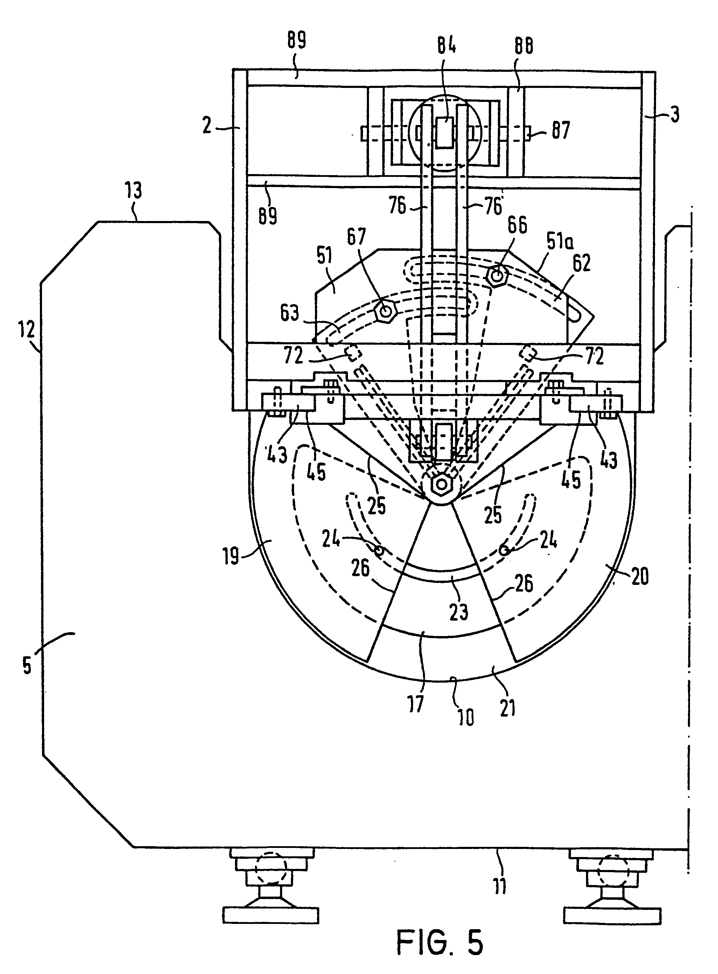

An der Unterkante 47 der Gleitplatte 44 ist eine waagerecht angeordnete Tragplatte 48 befestigt, die die Gleitplatte nach vorne und hinten überragt. Die Tragplatte 48 ist im vorderen überragenden Bereich 50 in der Draufsicht betrachtet dreieckig ausgebildet (Fig. 1, 2 und 5), wobei die Spitze des Dreiecks zur Achse A weist. Im Bereich der Achse A ist in Achsrichtung ein Loch 49 eingebracht. Der hintere überragende Bereich 51 der Tragplatte 48 kann in der Draufsicht rechteckig ausgebildet sein oder abgeschrägte Kanten 51a aufweisen.

Unter der ortsfesten Tragplatte 48 sind die Obermesserträger 52 und 53 in horizontaler Ebene schwenkbar angeordnet. Zu diesem Zweck sind die Messerträger 52, 53 in der Draufsicht betrachtet im wesentlichen kreissektorförmig ausgebildet, wobei die Kreisbogen 54, 55 rückwärtig und die abgerundeten Segmentspitzenbereiche 56, 57 vorne angeordnet sind. In den Spitzenbereichen 56, 57 sind vertikale Löcher 58, 59 eingebracht, die mit dem Loch 49 in der Tragplatte 48 fluchten und durch die eine mit der Achse A zusammenfallende Schwenkachse 60 greift, die die Messerträger 52 und 53 schwenkbar unter der Tragplatte 48 hält. Beispielsweise kann, die in Fig. 2 abgebildet, die Schwenkachse 60 aus einer Sechskantkopfschraube bestehen, die die Löcher 59, 58 und 49 durchgreift, wobei auf das Gewinde der Schraube Muttern 61 geschraubt sind, so dass die vertikale Befestigung der Messerträger gewährleistet ist.

Der Messerträger 53 ist zweckmässigerweise über dem Messerträger 52 angeordnet, so dass sie zur Verschwenkung aneinander vorbeigleiten können. Die Anordnung kann selbstverständlich auch umgekehrt sein. Zur Unterstützung der Lagerung in der Achse 60 sind im Bereich der Bögen 54, 55 bogenförmige Schlitze 62, 63 eingebracht. Ferner ist zweckmässigerweise vorgesehen, dass das Segment 52 im Radius kürzer ist als das Segment 53 und dass die Segmente einwärts gerichtete Stege 64, 65 zur Verlängerung der Schlitze 62, 63 aufweisen, wobei die Schlitze 62, 63 von oben gesehen nach hinten versetzt zueinander angeordnet sind. Die Schlitze werden von Stiften 66, 67 durchgriffen, die aus der Tragplatte 48 nach unten ragen, in oder an ihr befestigt sind und am unteren freien Ende zweckmässigerweise einen Kopf 68 aufweisen, der breiter ist als die Breite des jeweiligen Schlitzes, so dass die Stifte die Segmente 52, 53 haltern können und aufgrund der Länge der Schlitze die Schwenkbewegung der Messerträger begrenzen. Der Mittelpunkt der Schlitzbogen liegt in der Achse A. Eine andere Ausführungsform der Erfindung sieht vor, dass die Schlitze 62, 63 im Teil 51 der Tragplatte 48 eingebracht sind und sich die Stifte 66, 67 entsprechend in den Messerträgern 52, 53 befinden.

Im Bereich der Aussenkanten 69 sind unter den Segmenten 52, 53 Haltestege 70 befestigt, die, wie üblich, die Obermesser 41 tragen, die in an sich bekannter Weise an den zusammenstossenden Kanten 71 von oben betrachtet nach hinten angefast sind (nicht dargestellt), damit bei der Schwenkbewegung die Kanten 71 zusammenbleiben können.

Wesentlich ist, dass an jedem Messerträger 52, 53 ein Mitnehmerelement angeordnet ist, das mit dem zugeordneten Kreisscheibensegment 19, 20 der Untermesser in Verbindung steht, so dass die Schwenkbewegung der Kreisscheibensegmente 10, 20 ohne Schlupf auf die Obermesserträger 52, 53 übertragen wird. Eine zweckmässige Ausführungsform der Erfindung sieht vor, dass im Bogenbereich am freien Ende der Kanten 69 vertikal unten ragende Mitnehmerzapfen 72 befestigt sind. Diese Zapfen durchgreifen eine z. B. U-förmige Ausnehmung 73 im Randbereich des jeweiligen Kreisscheibensegments 19, 20. Vorzugsweise wird die Ausnehmung 73 durch einen Steg 74 gebildet, der rechtwinklig von der Hinterkante 25 abragt und an dem eine horizontal rechtwinklig einwärts gerichtete Rolle 75 angeordnet ist. In dieser Ausnehmung kann ein Zapfen 72 nach der Erfindung formschlüssig auf und ab gleiten, so dass die Hubbewegung der Obermesseranordnung nicht gestört wird. Mit derart einfachen Mitteln gelingt die Mitnahme der Obermesserträger beim Verschwenken der Untermesserträger, ohne dass eine in vertikaler Richtung starre Verbindung zwischen den Obermesser- und Untermesserträgern besteht.

Der Hubantrieb der Obermesserträger kann beliebig sein. Zweckmässig und einfach ist es, wie abgebildet, zwei parallel nebeneinander angeordnete Hebel 76 vorzusehen, die vorderendig einen Ausschnitt 77 in der Gleitplatte 44 durchgreifen und zwischen sich um die Achse 80 drehbar einen Verbindungssteg 78 lagern, der um die Achse 81 drehbar zwischen zwei nebeneinander auf dem Dreieckbereich 50 der Trägerplatte 48 angeordneten Lagerböcken sitzt. Eine weitere drehbare Lagerung der Hebel 76 um eine Achse 82 ist vorgesehen, wobei die Achse 82 in den Seitenwänden 2, 3 oder in damit verbundenen Stützelementen 83 abgestützt ist.

Am hinteren Ende sind die Hebel 76 um eine Achse 84 drehbar mit einer Kolbenstange 85 einer Kolben/Zylinder-Einheit 86 verbunden, die aufrecht steht und am Fussende ebenfalls um die Achse 87 drehbar in Lagerböcken 88 lagert. Die Lagerböcke 88 befinden sich senkrecht zwischen zwei die Wände 2, 3 verbindenden Querstreben 89 und sind an diesen befestigt. Dieser Antrieb der Obermesserträger ist einfach und raumsparend.

**Patentansprüche**

1. Eckenschere zum Ausschneiden von stumpf- bis spitzwinkligen Ecken aus einem Blech mit scherenartig zusammenwirkenden Ober- und Untermessern (40, 41) die jeweils zur Bildung einer winkligen Schneide aus zwei V-förmig gegeneinandergesetzten, an um eine vertikale Achse (A) verschwenkbaren Messerträgern (19, 20; 52, 53) lagernden Messern (40, 41) bestehen, wobei die Schwenkachse jeweils durch die Schneidenecke verläuft, und Mittel zur Verstellung des Winkels α zwischen den Schneiden vorgesehen sind, dadurch gekennzeichnet, dass zum Verstellen der Messer (40, 41) jeder Obermesserträger (52, 53) mit dem korrespondierenden Untermesserträger (19, 20) über einen am Ober- oder Untermesserträger (19, 20; 52, 53) befestigten Mitnehmer (72) formschlüssig ohne Behinderung des Scherenhubes in Verbindung steht.

2. Eckenschere nach Anspruch 1, dadurch gekennzeichnet, dass der Mitnehmer ein vertikal ausgerichteter Bolzen (72) ist, der formschlüssig in eine Ausnehmung (73) greift und während des Scherenhubes vertikal frei in der Ausnehmung gleitet.

3. Eckenschere nach den Ansprüchen 1 und/oder 2, dadurch gekennzeichnet, dass die Untermesserträger aus zwei gleich ausgebildeten, horizontal angeordneten Kreisscheibensektorsegmenten (19, 20) bestehen, die mit ihren Sektorecken in der Achse (A) gegeneinandergesetzt und um die Achse (A) schwenkbar gelagert sind, wobei deren rückwärtige Sektorkanten (25) die Untermesser (40) bilden oder lagern.

4. Eckenschere nach Anspruch 3, dadurch gekennzeichnet, dass sie Segmente (19, 20) im Arbeitstisch (5) in einer Ausnehmung (10) mit einem Kreisbogen, dessen Mittelpunkt in der Achse (A) liegt, angeordnet sind, wobei die Oberflächen der Segmente mit der Oberfläche des Arbeitstisches (5) fluchten und der Radius der Segmente geringfügig kleiner ist als der Radius des Kreisbogens der Ausnehmung (10).

5. Eckenschere nach den Ansprüchen 3 und/oder 4, dadurch gekennzeichnet, dass die Segmente (19, 20) auf einer waagerecht angeordneten, im Maschinenrahmen (1) abgestützten Kreissektorscheibe (17), deren Radius zur Bildung eines Ringspaltes (21) kleiner ist als der Radius des Kreisbogens der Ausnehmung (10) und deren V-förmiger Sektorausschnitt (18) rückwärtig angeordnet ist, lagern, wobei in der Scheibe (17) kreisbogenförmig eine Nut oder ein Spalt (23) eingebracht ist, deren Kreisbogenmittelpunkt in der Achse (A) liegt, und wobei in die Nut (23) je ein am Segment (19, 20) befestigter, vertikal nach unten weisender Stift (24) ragt, dessen Breite der Breite der Nut entspricht.

6. Eckenschere nach Anspruch 5, dadurch gekennzeichnet, dass die Nut (23) im Querschnitt T-förmig ausgebildet ist und der Stift (24) einen Kopf (28) aufweist, der in die Querausnehmung (27) der Nut (23) ragt, wobei der Stift (24) eine Bohrung (30) im Segment (19 bzw. 20) formschlüssig durchgreift, endseitig ein Gewinde trägt, auf das eine in einer Ausnehmung des Segments versenkte Mutter (29) geschraubt ist.

7. Eckenschere nach einem oder mehreren der Ansprüche 3 bis 6, dadurch gekennzeichnet, dass mit jedem Segment (19, 20) eine waagerecht angeordnete Spindel (31) in Verbindung steht, deren Drehung in Pfeilrichtung (37) die Verschwenkung des Segments (19 bzw. 20) in Pfeilrichtung (38) um die Achse (A) bewirkt.

8. Eckenschere nach Anspruch 7, dadurch gekennzeichnet, dass die Spindel (31) am hinteren Ende ein Aussengewinde (32) trägt, das in einem entsprechenden Innengewinde eines Lagerzapfens (33) geführt wird, der an der Unterseite im Aussenrandbereich in der Nähe der Kante (25) am Segment um eine vertikale Achse (B) drehbar angeordnet ist, der Lagerzapfen (33) in den Ringspalt (21) ragt, die Spindel (31) anderendig ein dem Schwenklager (33) entsprechendes Schwenklager (35) durchgreift, das schwenkbar an der Vorderkante des Arbeitstisches (5) sitzt, wobei am vorderen Ende der Spindel ein Rad (36) angeordnet ist.

9. Eckenschere nach einem oder mehreren der Ansprüche 3 bis 8, dadurch gekennzeichnet, dass die Ausnehmung (73) durch einen Steg (74) gebildet wird, der rechtwinklig von der Hinterkante (25) des Segments (19 bzw. 20) abragt und an dem eine horizontal rechtwinklig einwärts gerichtete Rolle (75) angeordnet ist.

10. Eckenschere nach einem oder mehreren der Ansprüche 3 bis 9, dadurch gekennzeichnet, dass die Obermesserträger (52 und 53) schwenkbar um eine mit der Achse (A) zusammenfallende Schwenkachse (60) angeordnet sind.

11. Eckenschere nach Anspruch 10, dadurch gekennzeichnet, dass die Messerträger (52, 53) kreissektorsegmentförmig ausgebildet sind, wobei die Kreisbogen (54, 55) rückwärtig und die abgerundeten Segmentspitzen (56, 57) vorne angeordnet sind, in den Spitzen (56, 57) vertikale Löcher (58, 59) eingebracht sind, die mit dem Loch (49) in einer über den Messerträgern angeordneten Tragplatte (48) fluchten, wobei die Schwenkachse (60) als Bolzen ausgeführt ist, der die Messerträger schwenkbar unter der Tragplatte (48) hält.

12. Eckenschere nach Anspruch 11, dadurch gekennzeichnet, dass ein Messerträger (53) über dem anderen Messerträger (52) angeordnet ist, im Bereich der Bögen (54, 55) bogenförmig Schlitze (62, 63) eingebracht sind, wobei ein Segment kürzer als das andere Segmente ausgeführt ist und wobei die Segmente einwärts gerichtete Stege (64, 65) zur Verlängerung der Schlitze (62, 63) aufweisen und die Schlitze von Stiften (66, 67) durchgriffen werden, die in der Tragplatte (48) befestigt sind und aus ihr vertikal nach unten ragen, die Stifte (66, 67) einen Kopf (68) aufweisen, der breiter ist als die Breite des jeweiligen Schlitzes, wobei der Mittelpunkt des Kreisbogens der Schlitze in der Achse (A) liegt.

13. Eckenschere nach den Ansprüchen 11 und/ oder 12, dadurch gekennzeichnet, dass im Bereich der Aussenkanten (69) unter den Segmenten Haltestege (70) befestigt sind, die die Obermesser (41) tragen, die in an sich bekannter Weise von den zusammenstossenden Kanten (71) ausgehend angefast sind.

14. Eckenschere nach einem oder mehreren der Ansprüche 11 bis 13, dadurch gekennzeichnet, dass im Bogenbereich am freien Ende der Kanten (69) vertikal nach unten ragende Mitnehmerzapfen (72) befestigt sind, die die U-förmige Ausnehmung (73) im Randbereich des zugeordneten Kreissektorenscheibensegments (19, 20) der Untermesser (40) durchgreifen und in den Ringspalt (21) ragen können.

15. Eckenschere nach einem oder mehreren der Ansprüche 11 bis 14, dadurch gekennzeichnet, dass die Tragplatte (48) an einer vertikal ausgerichteten Gleitplatte (44) befestigt ist, die in Gleitführungselementen (42) seitlich geführt wird, die im vorderen Endbereich der Wände (2 und 3) des Maschinengestells (1) abgestützt sind.

16. Eckenschere nach Anspruch 15, dadurch gekennzeichnet, dass die Tragplatte (48) und/ oder die Gleitplatte (44) mit einer Hubvorrichtung in Verbindung stehen.

17. Eckenschere nach Anspruch 16, dadurch gekennzeichnet, dass der Hubantrieb zwei parallel nebeneinander angeordnete Hebel (76) aufweist, die vorderendig einen Ausschnitt (77) der Gleitplatte (44) durchgreifen und zwischen sich um eine erste Achse (80) drehbar einen Verbindungssteg (78) lagern, der um eine zweite Achse (81) drehbar zwischen zwei nebeneinander auf dem Dreieckbereich (50) der Tragplatte (48) angeordneten Lagerböcken sitzt, eine weitere drehbare Lagerung der Hebel (76) um eine dritte Achse (82) vorgesehen ist, wobei die Achse (82) in den Seitenwänden (2, 3) abgestützt ist, und am hinteren Ende die Hebel (76) um eine vierte Achse (84) drehbar mit einer Kolbenstange (85) einer Kolben/Zylinder-Einheit (86) verbunden sind, die aufrecht steht und am Fussende ebenfalls um eine fünfte Achse (87) drehbar in Lagerböcken (88), die sich senkrecht zwischen zwei die Wände (2, 3) verbindenden Querstreben (89) befinden, lagert.

## Claims

1. A corner cutter for cutting out obtuse and acute angled corners from a metal sheet, having upper and lower blades (40, 41) which cooperate in the manner of shears and which each comprise, in order to form an angled cutting edge, two blades (40, 41) which are disposed opposite one another in a V-shape and rest on blade supports (19, 20; 52, 53) pivotable about a vertical axis (A), the pivot axis extending in each case through the corner of the blades and means being provided for setting the angle α between the blades, characterized in that, in order to set the blades (40, 41), each upper blade support (52, 53) is positively connected without obstruction of the shearing stroke to the corresponding lower blade support (19, 20) by way of an entrainment member (72) secured to the upper or lower blade support (19, 20; 52, 53).

2. A corner cutter according to Claim 1, characterized in that the entrainment member is a vertically orientated pin (72) which engages positively in a recess (73) and slides freely vertically in the recess during the shearing stroke.

3. A corner cutter according to Claims 1 and/or 2, characterized in that the lower blade supports comprise two similarly constructed, horizontally arranged circular disc sector segments (19, 20) which have their sector angles opposite one another in the axis (A) and are mounted so as to be pivotable about the axis (A), their rear sector edges (25) forming or supporting the lower blades (40).

4. A corner cutter according to Claim 3, characterized in that the segments (19, 20) are disposed in the workbench (5) in a recess (10) having a circular curve, the centre of which is on the axis (A), the surfaces of the segments being flush with the surface of the workbench (5) and the radius of the segments being slightly less than the radius of the arc of the recess (10).

5. A corner cutter according to Claims 3 and/or 4, characterized in that the segments (19, 20) rest on a sector-shaped disc (17), which is arranged horizontally and is supported in the machine frame (1) and the radius of which is less than the radius of the curve of the recess (10) so as to form an annular gap (21) and the V-shaped cutaway portion of which is at the rear, the disc (17) being provided with a groove or a slot (23) in the shape of an arc, the centre of which is on the axis (A), and a pin (24), secured to each of the segments (19, 20) and pointing vertically downwards and the width of which corresponds to the width of the groove (23), projects into the said groove in each case.

6. A corner cutter according to Claim 5, characterized in that the groove (23) is made T-shaped in cross-section and the pin (24) has a head (28) which projects into the transverse enlargement (27) of the groove (23), the pin (24) passing through a bore (30) in the segment (19 and 20 respectively) in a non-positively locking manner and having a thread at its end, onto which is screwed a nut (29) countersunk in a recess in the segment.

7. A corner cutter according to one or more of Claims 3 to 6, characterized in that there is joined to each segment (19, 20) a spindle (31) which is disposed horizontally and the rotation of which in the direction of the arrow (37) causes the segment (19 and 20 respectively) to pivot about the axis (A) in the direction of the arrow (38).

8. A corner cutter according to Claim 7, characterized in that the rear end of the spindle (31) has an external thread (32) which is guided in a corresponding internal thread in a bearing stud (33) which is disposed on the underside of the segment in the outer peripheral area in the vicinity of the edge (25) so as to be rotatable about a vertical axis (B), the bearing stud (33) projects into the annular gap (21), and the other end of the spindle (31) passes through a pivot bearing (35) which corresponds to the pivot bearing (33) and which is pivotably mounted on the forward edge of the workbench (5), a wheel (36) being provided at the front end of the spindle.

9. A corner cutter according to one or more of Claims 3 to 8, characterized in that the recess (73) is formed by an extension (74) which projects at right angles from the rear edge (25) of the segment (19 and 20 respectively) and on which is mounted a roller directed inwards at right angles horizontally.

10. A corner cutter according to one or more of Claims 3 to 9, characterized in that the upper blade supports (52 and 53) are arranged so as to be pivotable about a pivot axle (60) coinciding with the axis (A).

11. A corner cutter according to Claim 10, characterized in that the blade supports (52, 53) are made in the shape or circular sector segments, the arcs (54, 55) being arranged to the rear and the rounded segment angles (56, 57) being arranged towards the front, and the angles (56, 57) are provided with vertical holes (58, 59) which are in alignment with the hole (49) in a support plate (48) disposed above the blade supports, the pivot axle (60) being in the form of a pin which holds the blade supports below the support plate (48) so as to be pivotable.

12. A corner cutter according to Claim 11, characterized in that one blade support (53) is disposed above the other blade support (52), arcuate slots (62, 63) are provided in the region of the arcs (54, 55), one segment being made shorter than the other segment and the segments having extensions (64, 65) directed inwards in order to prolong the slots (62, 63), the slots are traversed by pins (66, 67) which are secured in the support plate (48) and project vertically downwards therefrom, and the pins (66, 67) have a head (68) which is wider than the width of the respective slot, the centre of the arc of the slots lying on the axis (A).

13. A corner cutter according to Claims 11 and/or 12, characterized in that support webs (70), which support the upper blades (41) which are chamfered in a manner known *per se* starting from the abutting edges (71), are secured below the segments in the region of the outer edges (69).

14. A corner cutter according to one or more of Claims 11 to 13, characterized in that tangs (72), which project vertically downwards and which can pass through the U-shaped recess (73) in the edge region of the associated circular sector disc segment (19, 20) of the lower blades (40) and project into the annular gap (21), are secured at the free end of the edges (69) in the region of the arcs.

15. A corner cutter according to one or more of Claims 11 to 14, characterized in that the support plate (48) is secured to a vertically orientated sliding plate (44) which is guided laterally in sliding guide elements (42) supported in the forward end region of the walls (2 and 3) of the machine frame (1).

16. A corner cutter according to Claim 15, characterized in that the support plate (48) and/or the sliding plate (44) are connected to a lifting apparatus.

17. A corner cutter according to Claim 16, characterized in that the lifting drive comprises two levers (76), which are arranged parallel beside one another and at their front ends pass through an opening (77) in the sliding plate (44) and support between them a connecting bar (78) in such a way that the latter can rotate about a first shaft (80), the said connecting bar being mounted so as to be rotatable about a second shaft (81) between two bearing blocks disposed beside one another on the triangular area (50) of the support plate (48), a further rotating bearing of the levers (76) about a third shaft (82) is provided, the shaft (82) being supported in the lateral walls (2, 3), and at the rear end the levers (76) are connected, rotatably about a fourth shaft (84), to a piston rod (85) of a piston/cylinder unit (86) which is positioned upright and at the lower end is likewise mounted, rotatably about a fifth shaft (87), in bearing blocks (88) which are disposed vertically between two transverse struts (89) connecting the walls (2, 3).


## Revendications

1. Cisaille pour pièces angulaires destinée à découper des angles variant de l'aigu à l'obtus dans une tôle au moyen de couteaux inférieurs et supérieurs (40, 41) agissant ensemble à la manière d'une cisaille, laquelle comporte, afin de produire une découpe angulaire, des couteaux (40, 41) opposés en forme de V et maintenus par des porte-couteau (19, 20; 52, 53) rotatifs autour d'un axe vertical (A) de telle sorte que l'axe de rotation passe par le sommet de l'angle de découpe et que des moyens pour régler l'angle α de la découpe sont prévus, caractérisée en ce que, dans le but de positionner les couteaux (40, 41), chaque porte-couteau supérieur (52, 53) est relié mécaniquement au porte-couteau inférieur correspondant (19, 20) par un toc d'entraînement (72) assujetti aux porte-couteau inférieurs et supérieurs (19, 20; 52, 53), sans que la course de la cisaille ne soit gênée.

2. Cisaille pour pièces angulaires selon la revendication 1, caractérisée en ce que le toc d'entraînement est une cheville verticale (72) qui est maintenue mécaniquement dans un guide (73) où elle coulisse librement à la verticale pendant la course de la cisaille.

3. Cisaille pour pièces angulaires selon les revendications 1 et/ou 2, caractérisée en ce que les porte-couteau inférieurs se composent de deux secteurs de disque identiques, disposés horizontalement (19, 20); en ce que lesdits secteurs de disque sont opposés par le sommet sur l'axe (A) et peuvent pivoter autour de l'axe (A); en ce que les arêtes antérieures (25) des secteurs de disque constituent les couteaux inférieurs (40) ou portent lesdits couteaux.

4. Cisaille pour pièces angulaires selon la revendication 3, caractérisée en ce que les secteurs de disque (19, 20) sont disposés dans un évidement en partie circulaire (10), centré sur l'axe (A), pratiqué dans le plateau de travail (5); en ce que la surface desdits secteurs de disque est au même niveau que celle du plateau de travail (5) et que leur rayon est légèrement inférieur à celui de la partie circulaire de l'évidement (10).

5. Cisaille pour pièces angulaires selon les revendications 3 et/ou 4, caractérisée en ce que les secteurs de disque (19, 20) reposent sur un disque diminué d'un secteur (17) et disposé horizontalement sur le bâti de la machine (1); en ce que le rayon de ce disque est inférieur à celui de l'évidement circulaire (10) de façon que soit ménagé un interstice (21) circulaire entre le disque et le plateau de travail; en ce que le secteur vide (18) dudit disque est orienté vers l'arrière; en ce que le disque (17) comporte une gorge ou un évidement (23) formant un arc de cercle et centré sur l'axe (A); en ce qu'une cheville (24) fixée sur chacun des secteurs de disque (19, 20) et orientée verticalement vers le bas pénètre dans la gorge (23) dont la largeur correspond à l'épaisseur de la cheville.

6. Cisaille pour pièces angulaires selon la revendication 5, caractérisée en ce que la gorge (23) a, vue en coupe transversale, la forme d'un T et la cheville (24) une tête (28) qui prend place dans la partie large de la gorge; en ce que la cheville (24) pénètre dans un trou (30) percé dans le secteur de disque (19, 20) auquel elle est fixée mécaniquement grâce au filetage qu'elle porte à son extrémité, sur lequel est serré un écrou (29); en ce que ledit écrou (29), une fois serré, disparaît dans un lamage du secteur de disque (19, 20).

7. Cisaille pour pièces angulaires selon l'une ou plusieurs des revendications 3 à 6, caractérisée en ce que chacun des secteurs de disque est relié à une tige (31) horizontale dont la rotation dans le sens de la flèche (17) provoque le pivotement du secteur de disque (19, 20) autour de l'axe (A) dans le sens de la flèche (38).

8. Cisaille pour pièces angulaires selon la revendication 7, caractérisée en ce que la tige (31) porte un filetage (32) à son extrémité antérieure et qu'elle est guidée par un palier cylindrique (33) qui comporte un trou fileté dans lequel se visse l'extrémité filetée de la tige; en ce que le palier cylindrique (33) est placé sous le bord du secteur de disque, à proximité de l'arête (25) dudit secteur, de façon à pouvoir pivoter autour d'un axe (B); en ce que le palier cylindrique (33) pénètre dans l'interstice circulaire (21); en ce que l'autre extrémité de la tige (31) est maintenue par un palier pivotant (35), correspondant au palier (33), situé sur le bord du plateau de travail (5); en ce que ladite extrémité porte un volant (36).

9. Cisaille pour pièces angulaires selon l'une ou plusieurs des revendications 3 à 8, caractérisée en ce que le guide (73) est composé d'une partie saillante (74) orthogonale à l'arête antérieure du secteur de disque (19, 20) sur laquelle est fixée, à angle droit, vers l'intérieur, une molette horizontale (75).

10. Cisaille pour pièces angulaires selon l'une ou plusieurs des revendications 3 à 9, caractérisée en ce que les porte-couteau supérieurs (52 et 53) peuvent pivoter autour d'un même axe de rotation (60) centré sur l'axe (A).

11. Cisaille pour pièces angulaires selon la revendication 10, caractérisée en ce que les porte-couteau supérieurs (52 et 53) sont formés d'un secteur de disque dont la partie courbe (54, 55) est orientée vers l'arrière et la pointe (56, 57), arrondie, vers l'avant; en ce que des trous verticaux (58, 59) sont percés dans les pointes et sont alignés avec le trou (49) percé dans une plaque-support (48) disposée au-dessus des porte-couteau; en ce que l'axe de rotation (60) sert de pivot et maintient les porte-couteau pivotant sous la plaque-support (48).

12. Cisaille pour pièces angulaires selon la revendication 11, caractérisée en ce que l'un des porte-couteau (53) est placé sous l'autre porte-couteau (52); en ce qu'une gorge circulaire (62, 63) est pratiquée dans la partie courbe (54, 55) des secteurs de disque; en ce que l'un des secteurs de disque a un rayon inférieur à celui de l'autre secteur de disque; en ce que les secteurs de disque comportent une partie saillante (64, 65) dirigée vers l'intérieur, dans laquelle se prolongent les gorges (62, 63); en ce que des chevilles (66, 67) fixées verticalement sur la plaque-support (48) et orientées vers le bas pénètrent dans des gorges (62, 63); en ce que lesdites chevilles comportent un collet plus large que lesdites gorges; en ce que le centre des gorges est situé sur l'axe (A).

13. Cisaille pour pièces angulaires selon les revendications 11 et/ou 12, caractérisée en ce que les couteaux supérieurs (41) sont portés par des pièces (70) fixées sous les secteurs de disque, à proximité de leur arête extérieure (69); en ce que les couteaux sont assujettis l'un à l'autre, d'une manière connue en soi, par leur arête commune (71).

14. Cisaille pour pièces angulaires selon l'une ou plusieurs des revendications 11 à 13, caractérisée en ce que sur l'extrémité libre de l'arête (69), à proximité de la courbure, sont fixés les tocs d'entraînement (72), verticalement, vers le bas, lesquels pénètrent dans les guides (73) en forme de U, placés sur le bord des secteurs de disque (19, 20) des couteaux inférieurs (40), et peuvent faire saillie dans l'interstice circulaire (21).

15. Cisaille pour pièces angulaires selon l'une ou plusieurs des revendications 11 à 14, caractérisée en ce que la plaque-support (48) est fixée à une plaque coulissante verticale (44) dont le guidage est assuré par des guides latéraux (42) lesquels prennent appui sur les parois (2 et 3) du bâti de la machine (1) à l'extrémité de leur partie antérieure.

16. Cisaille pour pièces angulaires selon la revendication 15, caractérisée en ce que la plaque-support (48) et/ou la plaque coulissante (44) sont reliées à un dispositif élévateur.

17. Cisaille pour pièces angulaires selon la revendication 16, caractérisée en ce que la commande du dispositif élévateur comporte deux leviers (76), disposés parallèlement côte à côte, dont l'extrémité antérieure traverse un évidement (77) pratiqué dans la plaque coulissante (44) et qui sont réunis par l'intermédiaire d'une entretoise (78) pivotant autour d'un premier axe (80); en ce que ladite entretoise peut pivoter autour d'un second axe (81) et est maintenue entre deux supports placés côte à côte sur la partie triangulaire de la plaque-support (48); en ce qu'une autre entretoise pivotant autour d'un troisième axe (82) est prévue entre les leviers (76); en ce que l'axe (82) est supporté par les parois latérales (2, 3); en ce que l'extrémité postérieure des leviers (76) pivote autour d'un quatrième axe (84) et est reliée à la tige de piston (85) d'un piston mobile dans un cylindre (86); en ce que ledit cylindre est dressé debout et pivote à sa base autour d'un cinquième axe (87) entre deux supports verticaux (88) disposés contre une paroi de renforcement (89) reliant les parois transversales (2, 3).

FIG. 1

FIG. 2

FIG. 3

FIG. 4

FIG. 5

FIG. 6